# EUROPEAN PATENT SPECIFICATION

(11) **EP 3 139 747 B1**
(45) Date of publication and mention of the grant of the patent: **02.01.2019**
(21) Application number: 15728191.6
(22) Date of filing: 22.04.2015
(51) Int. Cl.: A21C 9/08

(54) **LOADING ASSEMBLY FOR LOADING DOUGH PORTIONS, PARTICULARLY DOUGH BALLS, INTO BAKING MOULDS**
LADEANORDNUNG ZUM LADEN VON TEIGPORTIONEN, INSBESONDERE VON TEIGKUGELN, IN BACKFORMEN
ENSEMBLE DE CHARGEMENT POUR CHARGER DES PORTIONS DE PÂTE, EN PARTICULIER DES BOULES DE PÂTE, DANS DES MOULES DE CUISSON

(30) Priority: 05.05.2014 NL 2012756
(43) Date of publication of application: 15.03.2017
(73) Proprietor: Kaak, Johan Hendrik Bernard, 7011 DZ Gaanderen (NL)
(72) Inventor: DALRI, Gabriele, NL-7061 GA Terborg (NL); CATTANEO, Andrea, NL-7061 GA Terborg (NL)
(74) Representative: Melchior, Robin
(86) International application number: PCT/NL2015/050266
(87) International publication number: WO 2015/170968

(56) References cited:
- WO-A1-02/051248
- US-A- 6 065 392
- US-A1- 2009 074 902

## Description

### BACKGROUND

The invention relates to a loading assembly for loading dough portions, particularly dough balls, into baking moulds.

EP 1 343 378 B1 discloses a charging device for introducing dough into baking moulds formed by top and bottom baking plates. The feeding device has a feeding station above the path of the bottom baking plates, with a depositing device which deposits dough pieces at predetermined position on the baking surfaces of the bottom baking plates. The depositing device is provided with a continuous transport chain circulating a carriage with receiving cups transverse to the movement of the baking plates. Dough pieces are dropped from a tumbler into the receiving cups and, with each cycle of the continuous transport chain, are deposited onto the baking plate. The depositing device is temporarily movable together with the bottom baking plates to enable the baking plates to continue moving during the deposition.

The known receiving cups are arranged for depositing a fixed number of dough pieces onto the bottom baking plates. The bottom baking plates define a corresponding number of predetermined positions for the dough piece. The known charging device is unable to accommodate different baking plates having a different number or configuration of positions. Generally, different charging devices are used for introducing dough into various different baking plates.

It is an object of the present invention to provide a loading assembly for loading dough portions, particularly dough balls, into a variety of different baking moulds.

US 6 065 392 A discloses a loading assembly for loading dough balls into different baking moulds. The loading assembly is manually adapted to the different baking moulds by resetting the positions and number of roller elements supplying the dough balls. This document discloses all the features in the preamble of claim 1.

### SUMMARY OF THE INVENTION

According to a first aspect, the invention provides a loading assembly for loading dough portions, particularly dough balls, into a plurality of baking moulds, wherein the loading assembly comprises at least one loading member that is provided with a container element for receiving one of the dough portions and a releasing element for releasing the one dough portion from the container element into one of the plurality of baking moulds, wherein the plurality of baking moulds comprises at least one first baking mould having one or more first mould sections for separately receiving one or more dough portions and at least one second baking mould, interchangeable with the at least one first baking mould and having two or more second mould sections for separately receiving two or more dough portions, wherein the number of first mould sections is different from the number of second mould sections, wherein the loading assembly further comprises a drive system that is arranged for positioning the at least one loading member relative to the one baking mould and a control system that is arranged for controlling the drive system and switching, depending on the one baking mould being one of the at least one first baking mould or one of the at least one second baking mould, between a first mode that is adapted for positioning the at least one loading member into each one of one or more first release positions above the respective one or more first mould sections of the at least one first baking mould and a second mode that is adapted for positioning the at least one loading member into each one of two or more second release positions above the respective two or more second mould sections of the at least one second baking mould.

The different modes of control can provide for a switchover to different production configurations for production of dough products with different characteristics, e.g. different dimensions, without the need to use a different machine and/or without the need to replace the at least one loading member by a different loading member or even a set of loading members.

In an embodiment the loading assembly is provided with a support member with a substantially horizontal support surface for supporting the one baking mould relative to the at least one loading member, wherein the drive system comprises at least two actuators for moving the at least one loading member in two substantially orthogonal directions, parallel to the support surface. Thus, the loading members can be moved in said two orthogonal directions, in a substantially horizontal plane above the support member.

In an embodiment the plurality of baking moulds comprises a first series of at least two first baking moulds and a second series of at least two second baking moulds, wherein each one of the first baking moulds forms an interchanging pair with one of the second baking moulds, wherein the loading assembly comprises a plurality of loading members, one for each interchanging pair, wherein the drive system is operationally coupled to each of the plurality of loading members for positioning each of the plurality of loading members relative to the first baking mould or the second baking mould of a respective interchanging pair, and wherein the control system is arranged for controlling the drive system and switching between the first mode and the second mode for each of the interchanging pairs. By having a plurality of loading members, the first and second baking moulds of the first or second series, respectively, can be loaded simultaneously.

In a preferred embodiment thereof all of the first baking moulds in the first series are arranged to be interchanged by all of the respective second baking moulds in the second series simultaneously, wherein the drive system is arranged for synchronously positioning each of the plurality of loading members above the first baking moulds or the second baking moulds of the first series or the second series, respectively. By interchanging all of the first baking moulds by corresponding second baking moulds, the switchover between the first mode and the second mode can be performed for all loading members at once.

In an embodiment the second baking moulds in the second series are arranged to be placed in a linear array with a center-to-center distance, wherein the plurality of loading members are arranged to extend parallel to the linear array, with a center-to-center distance between the loading members that is equal or substantially equal to the center-to-center distance of at least the second baking moulds. Thus one of the loading members can be moved to every corner of the respective second baking mould while the directly adjacent loading member can do the same at the directly adjacent second baking mould, without the adjacent loading members interfering with each others loading operation.

In an embodiment the plurality of loading members are operationally coupled to a common carrier, wherein the drive system is operationally coupled to the common carrier for moving the plurality of loading members in unison. Thus, as the drive system only needs to drive the common carrier to achieve synchronous movement of all loading members, the drive system can be kept relatively simple.

In an embodiment the loading assembly comprises a dough supply for supplying the dough portions to the at least one loading member in a receiving position, wherein the control system is arranged for returning the at least one loading member to the receiving position after each movement of said at least one loading member to one of the one or more first release positions or one of the one or more second release positions, when the respective one of the first release positions or the second release positions is different from the receiving position. Thus, the dough supply can be held stationary in the receiving position. Preferably, the receiving position is fixed relative to first release positions and the second release positions.

In an embodiment the container element comprises two container halves which together define a container volume for receiving the one dough portion, wherein the releasing element comprises an actuator that is operationally coupled to both container halves to reciprocally move said container halves to and fro each other between an abutting position and a spaced apart position, wherein, in the spaced apart position, the distance between the container halves is sufficient to allow the one dough portion to pass from the container volume between the container halves under the influence of gravity. Thus, no additional valves, shutters or the like, are required for the release of the dough portion.

In an embodiment the container halves are each provided with an inclined bottom surface which together, in the abutting position, are mutually opposite to define a tapered bottom section of the receiving volume, wherein, upon movement of the container halves towards the spaced apart position, the bottom surfaces are arranged to be spaced apart for a controlled passage of the one dough portion therein between. Thus, the lowering or deposition of the dough portion onto the baking mould can be more controlled and more accurate.

In a preferred embodiment the number of first mould sections is one and the number of second mould sections is at least two, and preferably at least four.

In a preferred embodiment the drive system is an XY-drive system.

Preferably, the at least one first baking mould and the at least one second baking mould each comprise a plate-like element, wherein the one or more first mould sections and the two or more second mould sections are formed as suitably shaped mould recesses in said plate-like element.

In a preferred embodiment thereof the at least one first baking mould and the at least one second baking mould are moulds for the production of pizzas, wherein the one or more first mould sections of the at least one first baking mould are dimensioned for the production of mid-sized to full-size pizzas and wherein the one or more second mould sections of the at least one second baking mould are dimensioned for the production of small-sized or mini-sized pizzas. The loading system can be particularly suited for the loading of dough portions for the production of pizzas, since pizzas typically come in all shapes and sizes.

According to a second aspect, the invention provides a method for loading dough portions, particularly dough balls, into a plurality of baking moulds, with the use of the loading assembly according to claim 1, wherein the control system controls the drive system and switches, depending on the one baking mould being one of the at least one first baking mould or one of the at least one second baking mould, between a first mode and a second mode, wherein, in the first mode, the at least one loading member is positioned into each one of one or more first release positions above the respective one or more first mould sections of the first baking mould and wherein, in the second mode, the at least one loading member is positioned into each one of two or more second release positions above the respective two or more second mould sections of the second baking mould. This allows for the same switchover functionality as illustrated above.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached schematic drawings, in which:
figure 1 shows the loading assembly for loading dough portions, in particular dough balls, into a variety of baking moulds, and a series of first baking moulds;
figure 2 shows the loading assembly according to figure 1, and a series of second baking moulds; and
figures 3A-3L show the steps of loading dough portions, in particular dough balls, into the series of second baking moulds according to figure 2.

### DETAILED DESCRIPTION OF THE INVENTION

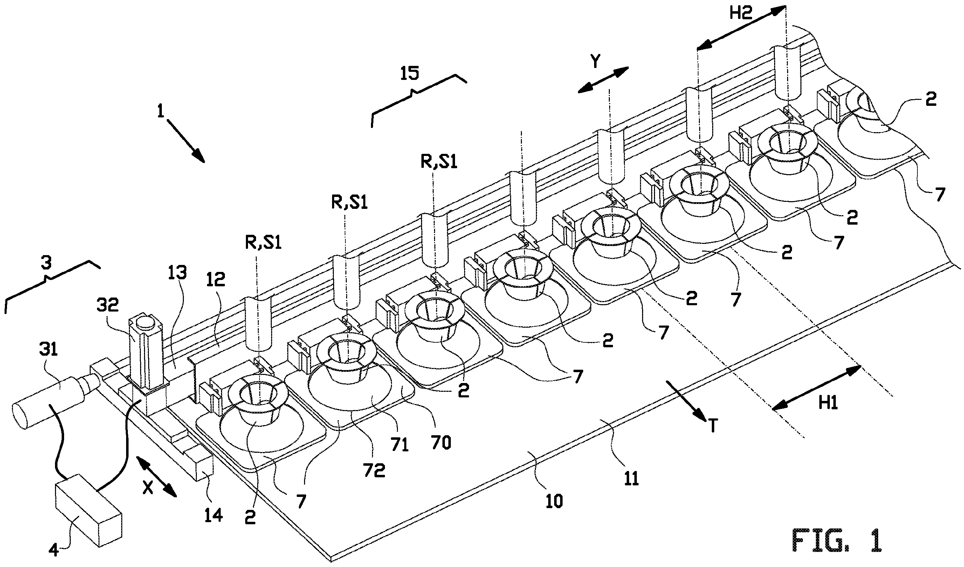

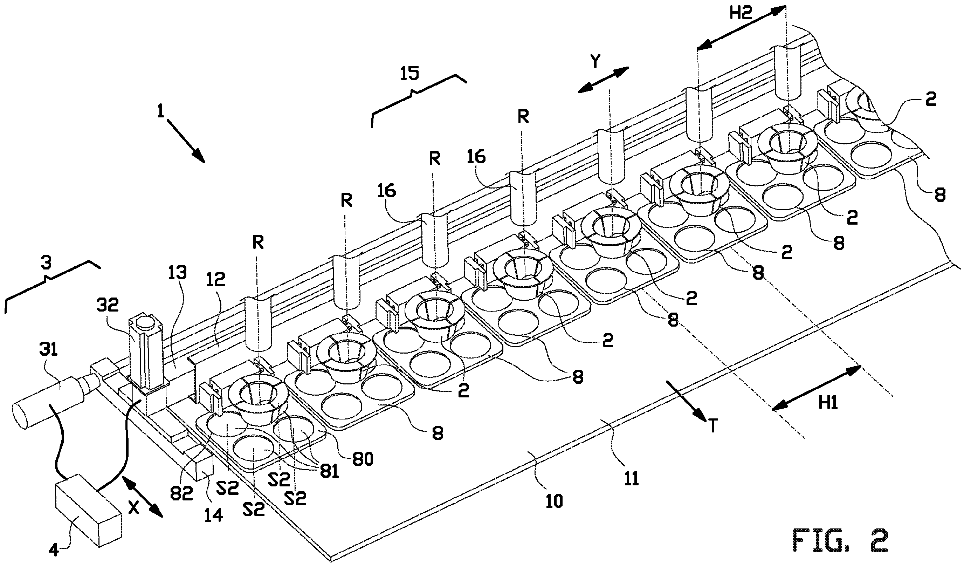

Figures 1 and 2 show a loading assembly 1 for loading dough portions, in particular dough balls 9, into a plurality of baking pans or baking moulds 7, 8. The dough balls 9 are suitably rounded and proofed in prior stages of a dough production process (not shown), and are preferably intended for the production of pizzas or pizza crusts. Once the dough balls 9 are loaded into the plurality of baking moulds 7, 8, the dough balls 9 are optionally flattened and subsequently fed into an oven for baking.

The plurality of baking moulds 7, 8 comprises a first series of first baking moulds 7 and a second series of second baking moulds 8. Each of the first baking moulds 7 comprises a plate-like element 70 and one or more first mould sections 71 for receiving one or more dough balls 9, in this example only one single first mould section 71 for receiving a single dough ball 9. The single mould section 71 is formed as a suitably shaped, preferably circular mould recess 72 in said plate-like element 70. The diameter of the mould recess 72 is dimensioned for the production of mid-sized to full-size pizzas, e.g. with a diameter of at least twenty centimeters. Each of the second baking moulds 8 similarly comprises a plate-like element 80 and two or more second mould sections 81, in this example four second mould sections 81 for separately receiving four dough balls 9. The plate-like elements 70, 80 of the first baking moulds 7 and second baking moulds 8 preferably have the same outer dimensions. The second mould sections 81 are formed as suitably shaped, preferably circular mould recesses 82 in said plate-like element 80. The diameter of the mould recesses 82 is dimensioned for the production of small-size to mini-size pizzas, e.g. with a diameter of less than twenty centimeters. The second mould sections 81 are evenly distributed over the plate-like element 80 in the four quadrants thereof.

As illustrated above, the number of first mould sections 71 in the first baking mould 7 is different from the number of second mould sections 81 in the second baking mould 8. The first baking moulds 7 and the second baking moulds 8 are mutually interchangeable. This allows for an operator to switchover to different production configurations for production of dough products, in this example pizzas or pizza crusts, with different characteristics. Preferably, the outer dimensions of the baking moulds 7, 8 are substantially the same or identical, to allow replacement of one baking moulds 7, 8 for another baking mould 7, 8 in the same position.

The loading assembly 1 is provided with a support member, in this example in the form of a conveyor 10 with a transport direction T, for supporting the baking moulds 7, 8 during the loading of the dough balls 9. The conveyor 10 is provided with a horizontal or a substantially horizontal support surface 11 movable and extending in the transport direction T for horizontally or substantially horizontally supporting the baking moulds 7, 8 with respect to the loading assembly 1. During loading, either all of the first baking moulds 7 of the first series or all of the second baking moulds 8 of the second series are arranged in a row or in a linear array on the support surface 11, as show in figures 1 and 2, respectively. The baking moulds 7, 8 in the linear array are evenly distributed or indexed with a indexing, heart-to-heart or center-to-center distance H1 in the direction of said linear array.

As shown in figures 1 and 2, the loading assembly 1 further comprises an elongated common carrier, in this example in the form of a U-shaped carrier profile or carrier beam 12, and a plurality of loading members 2, one for each baking mould 7, 8 in the series, arranged on, suspended from or coupled to the carrier beam 12. The carrier beam 12 is arranged to extend parallel to or substantially parallel to the linear array on the support surface 11 and/or transverse to or perpendicular to the transport direction T of the conveyor 10. The loading members 2 have an indexing, heart-to-heart or center-to-center distance H2 along the carrier beam 12 that is equal to the indexing, heart-to-heart or center-to-center distance H2 of the baking moulds 7, 8 in the array, such that one of the loading member 2 can be moved to every corner of the respective baking mould 7, 8 without one of the other loading members 2 overlapping with the same baking mould 7, 8. The carrier beam 12 is slidably or movably supported on a track beam 13, which track beam 13 is slidably or movably supported on a frame 14. The frame 14 is placed on a factory floor and that forms the basis for the loading assembly 1.

The loading assembly 1 further comprises a dough supply 15 for supplying the dough balls 9 to the plurality of loading members 2 in predetermined receiving positions R, one for each of the plurality of loading members 2. The dough supply 15 can for example comprise a plurality of supply tubes 16, debouching vertically and directly or concentrically above the respective receiving positions R. During the loading of the dough balls 9, the receiving positions R are fixed with respect to the frame 14 and are preferably located vertically above or in line with the center of the respective baking mould 7, 8 underneath.

The loading assembly 1 is provided with a drive system 3 that is operationally coupled to the carrier beam 12, the track beam 13 and the frame 14 for moving the carrier beam 12, and the loading members 2 supported thereon, relative to the conveyor 10 and the baking moulds 7, 8 supported thereon. The drive system 3 comprises a first actuator 31, e.g. a linear actuator, operationally arranged between the frame 14 and the track beam 13, for moving the track beam 13 relative to the frame 14 in a first direction X, transverse or perpendicular to the linear array of baking moulds 7, 8 on the conveyor 10 and/or parallel or substantially parallel to the transport direction T of the conveyor 10. The drive system 3 comprises a second actuator 32, e.g. a linear actuator, operationally arranged between the track beam 13 and the carrier beam 12, for moving the carrier beam 12 relative to the track beam 13 in a second direction Y, parallel to or substantially parallel to the linear array of baking moulds 7, 8 on the conveyor 10 and/or transverse or perpendicular to the transport direction T of the conveyor 10. The first direction X and the second direction Y are orthogonal or substantially orthogonal and extend parallel or substantially parallel to the support surface 11 of the conveyor 10. The drive system 3 can thus effectively drive the plurality of loading members 2 in the first direction X, the second direction Y or a combination thereof, and can therefore be considered as an 'XY' drive system.

The loading assembly 1 is provided with a control system 4 (only schematically shown in figures 1 and 2 by a box), for controlling the drive system 3 in a manner that will be described in more detail hereafter.

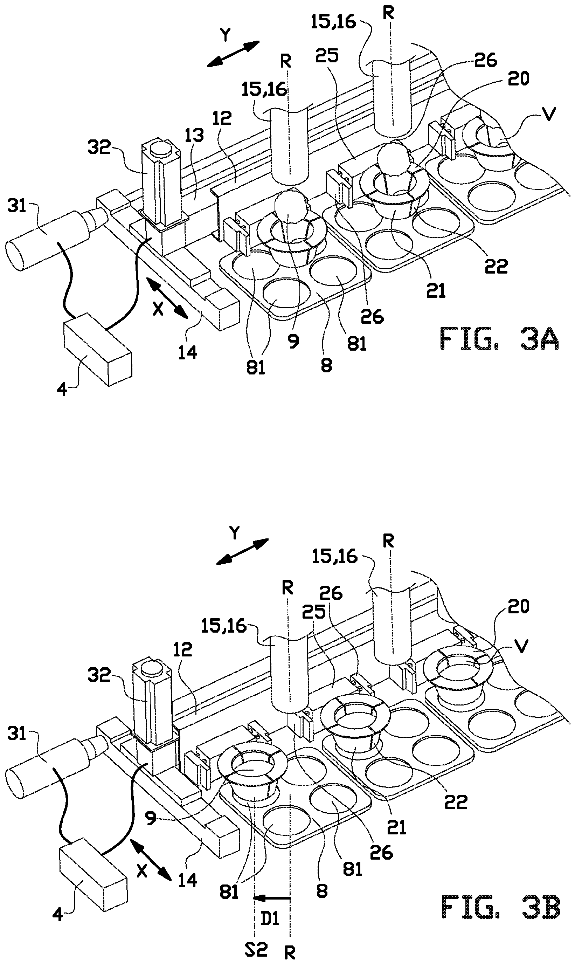

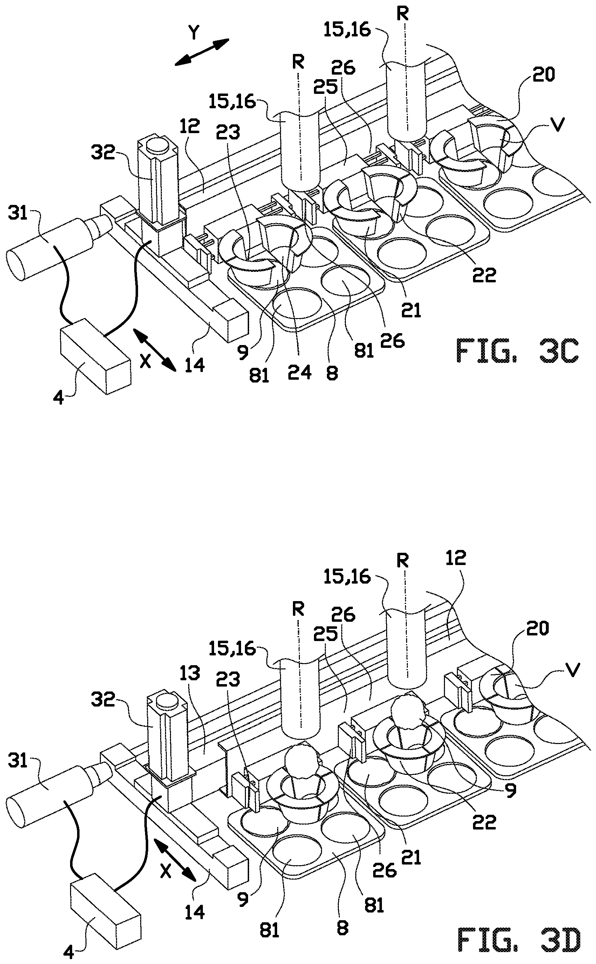

As shown in more detail in figures 3A and 3C, each of the loading members 2 is provided with a container element 20 for receiving one of the dough balls 9 from the dough supply 15 in the respective receiving position R and a releasing element 25 for releasing the one dough ball 9 from the container element 20 into the one or more mould sections 71, 81 of the respective baking mould 7, 8 in a number of release positions S1, S2. The release positions S1, S2 are defined by the centers of the respective one or more mould sections 71, 81. In case of the single first mould section 71 of the first baking mould 7, the single first release position S1 is the same as the respective receiving position R for said first baking mould 7. In case of the four second mould sections 81 of the second baking mould 8, the four second release positions S2 are shifted with respect to the respective receiving position R in four offset directions D1, D2, D3, D4.

The container element 20 comprises two container halves 21, 22 which together define a container volume V for receiving the dough ball 9. The releasing element 25 comprises an actuator 26, e.g. a linear actuator, that is operationally coupled to both container halves 21, 22 to reciprocally move said container halves 21, 22, preferably with respect to the carrier beam 12, to and fro each other between an abutting position as shown in figure 3A and a spaced apart position as shown in figure 3C. In the spaced apart position, the distance between the container halves 21, 22 is sufficient to allow the dough ball 9 to fall, drop or pass from the container volume V between the container halves 21, 22 under the influence of gravity G. To control the drop of the dough ball 9 from the container volume V, the container halves 21, 22 are each provided with an inclined bottom surface 23, 24 which together, in the abutting position, are mutually opposite to define a tapered bottom section of the receiving volume V. Upon movement of the container halves 21, 22 towards the spaced apart position, the bottom surfaces 23, 24 are gradually spaced apart for a controlled passage or lowering of the dough ball 9 therein between.

The control system 4 is operationally coupled to the actuators 26 of the releasing elements 25 of each of the plurality of loading members 2 to control the release of dough balls 9 from the loading members 2 in a manner which will be described hereafter.

The method for loading dough balls 9, into a the plurality of baking moulds 7, 8, with the use of the aforementioned loading assembly 1 will be elucidated below, with reference to figures 1, 2 and figures 3A-L.

In figure 1, the loading assembly 1 is in a first mode for loading dough balls 9 into the single first mould sections 71 of an array of first baking moulds 7 of the first series. As the receiving positions R match the respective first release positions S1, the loading assembly 1 can be operated in a relatively simple manner. The control system 4 controls the drive system 3 to position the plurality of loading members 2 vertically, directly or concentrically above the first release positions S1. The dough supply 15 supplies dough balls 9 to the loading members 2 and the control system 4 subsequently controls the simultaneous release of the dough balls 9 from the plurality of loading members 2 into the single first mould sections 71 of the respective first baking moulds 7 (not shown).

However, when a switchover is required from the production of mid-size or large-size pizzas to small-size or mini-size pizzas, each of the first baking moulds 7 of the first series is interchanged or replaced by one of the second baking moulds 8 of the second series. Thus, every first baking mould 7 in the first series forms an interchanging pair with one of the second baking moulds 8 in the second series. After the switchover, a new linear array of second baking moulds 8 is formed on the conveyor 6, having a different number of second mould sections 81 with respect to the single first mould sections 71 of the first baking moulds 7. An operator provides an input (e.g. via a screen, button or similar control) to the control system 4 indicating that a different mode is required. Alternatively, the loading assembly 1 may be provided with detection means (not shown) for detecting the type of baking moulds 7, 8 being placed on the conveyor 6. The control system 4 now switches to a second, more complex mode for loading one dough ball 9 into each of the mould sections 81 of each of the second moulds 8 in the linear array.

In figure 3A, the situation is shown in which the control system 4 has controlled the drive system 3 to move the loading members 2 to their respective receiving positions R above the centers of the second baking moulds 8. The container halves 21, 22 of the container element 20 of each of the loading members 2 are in the abutting position, thereby forming the container volume V for receiving a dough ball 9. The dough supply 15 supplies one dough ball 9 to the container volume V of each of the loading members 2. As shown in figure 3B, once the dough balls 9 are received in the container volumes V, the control system 4 controls the drive system 3 to move the loading members 2, for each respective second baking mould 8, in a first of the offset directions D1-D4 towards one of the second mould sections 81 in one of the quadrants of the respective second baking mould 8. Figure 3C shows the situation when the loading members 2 have arrived in the respective second release positions S2 for the second mould sections 81 towards which the loading members 2 have been moved. The control system 4 subsequently controls the actuators 26 of the releasing elements 25 of all of the loading members 2 simultaneously to release the dough balls 9, contained in the respective container volumes V, from said container volumes V and into the second mould sections 81 directly or vertically underneath.

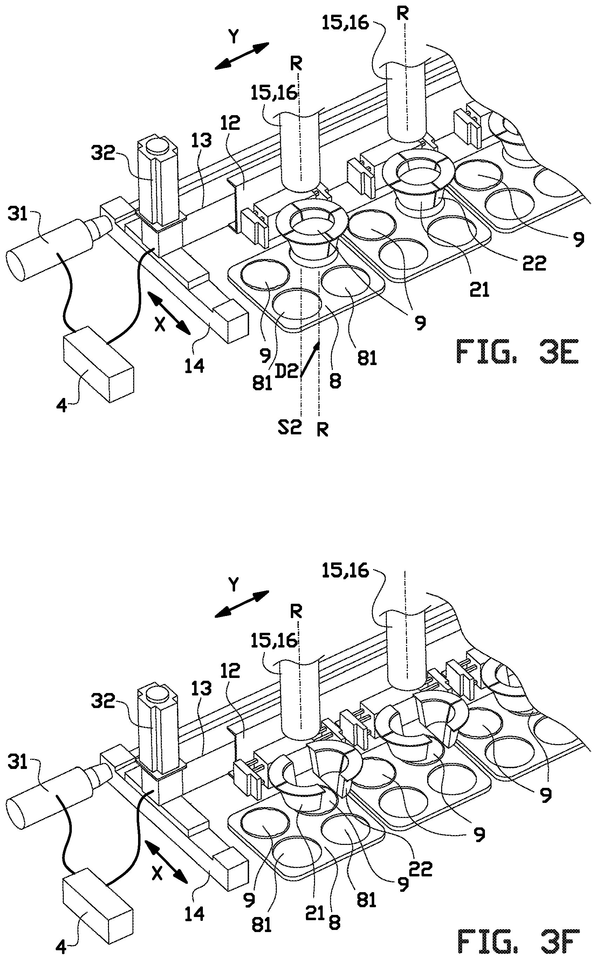

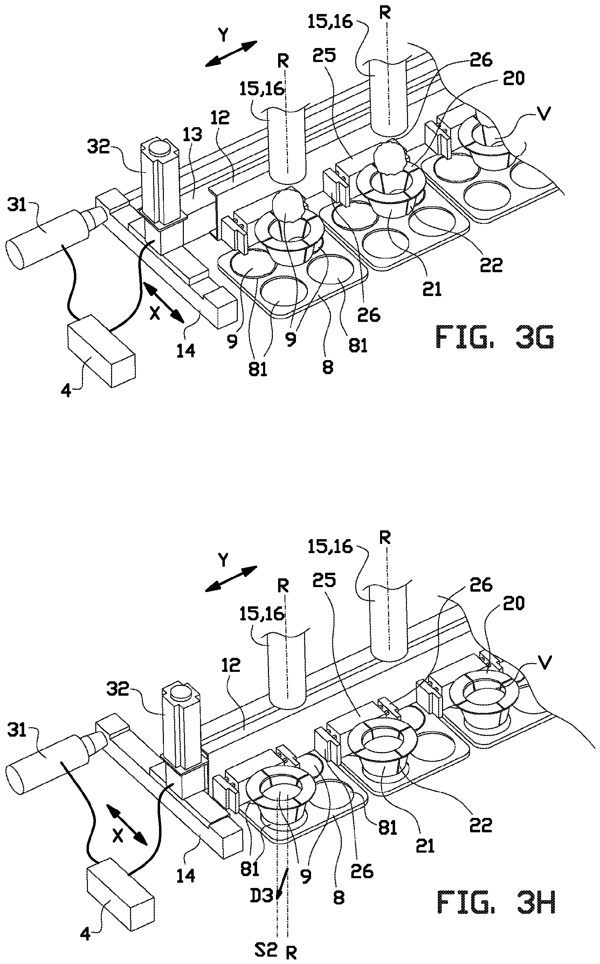

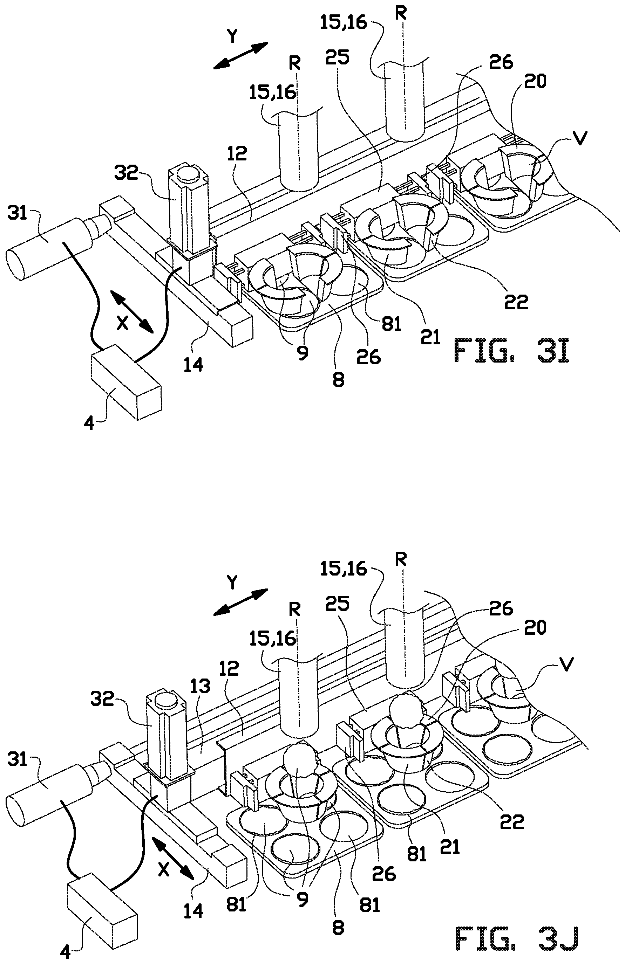

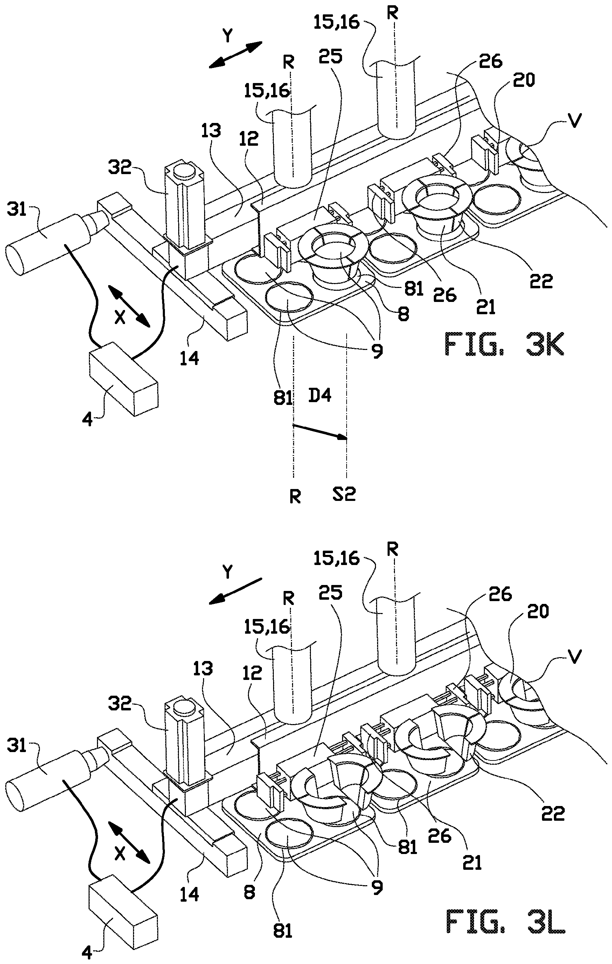

Figure 3D shows the return of the loading members 2, controlled by the control system 4 and actuated by the drive system 3, to the receiving position R in the center above the second baking moulds 2. The above steps of the method are now repeated in a second cycle for each second mould section 81 of each of the second baking moulds 8, until all second mould sections 81 have been loaded with one of the dough balls 9. In particular, figures 3D, 3E and 3F show the steps for receiving a dough balls 9 in the receiving position R, the subsequent controlled movement of the loading members 2, in unison, in another, second offset direction D2 to another of the respective second release positions S2 above of another of the respective second mould sections 81, and the subsequent controlled release of the received dough balls 9 into the other of the respective mould sections 81. Similarly, figures 3G, 3H and 3I show a third cycle of said steps for another of the respective second mould sections 81 and finally, figures 3J, 3K and 3L show the final fourth cycle in relation to the last of the respective second moulds sections 81 to be loaded.

In summary, the invention provides a loading assembly 1 for loading dough portions 9 into baking moulds 7, 8, wherein the loading assembly 1 comprises a loading member 2, wherein the baking moulds 7, 8 comprises a first baking mould 7 having one or more first mould sections 71 and a second baking mould 8, interchangeable with the first baking mould 7 and having two or more second mould sections 8, wherein the number of first mould sections 71 is different from the number of second mould sections 81, wherein the loading assembly 1 comprises a drive system 3 and a control system 4 for controlling the drive system 3 and switching between a first mode for positioning the loading member 2 into one of one or more first release positions S1 above the respective one or more first mould sections 71 of the first baking mould 7 and a second mode for positioning the loading member 2 into second release positions S2 above the respective two or more second mould sections 81 of the second baking mould 8.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

For example, it will be apparent that the loading system 1 is adaptable for a variety of alternative baking moulds, e.g. an alternative first baking mould having more than one first mould section and an alternative second mould have more second mould sections than the number of first mould section of the alternative first baking mould. Accordingly, the both modes of the control system should be adapted to accommodate loading of dough balls 9 into each of the mould sections of the alternative baking moulds. Furthermore, it can be appreciated that more than two different series of baking moulds may be provided, in which case the control system is adapted for switching between more than two modes of operation. Finally, in an alternative embodiment of the invention, the conveyor 10 is controlled by the control system 4 in the transport direction T to effectively position the loading members 2 relative to the baking moulds 7, 8 in the first direction X, as an alternative to having the first actuator 31. In that case, the conveyor 10 can be considered to be a part of the drive system 3.

## Claims

1. Loading assembly (1) for loading dough portions, particularly dough balls (9), into a plurality of baking moulds (7, 8), wherein the loading assembly (1) comprises at least one loading member (2) that is provided with a container element (20) for receiving one of the dough portions and a releasing element (25) for releasing the one dough portion from the container element (20) into one of the plurality of baking moulds (7, 8), wherein the plurality of baking moulds (7, 8) comprises at least one first baking mould (7) having one or more first mould sections (71) for separately receiving one or more dough portions and at least one second baking mould (8), interchangeable with the at least one first baking mould (7) and having two or more second mould sections (81) for separately receiving two or more dough portions, wherein the number of first mould sections (71) is different from the number of second mould sections (82), wherein the loading assembly (1) further comprises a drive system (3) that is arranged for positioning the at least one loading member (2) relative to the one baking mould (7, 8), the loading assembly (1) being **characterized in that** it further comprises a control system (4) that is arranged for controlling the drive system (3) and switching, depending on the one baking mould (7, 8) being one of the at least one first baking mould (7) or one of the at least one second baking mould (8), between a first mode that is adapted for positioning the at least one loading member (2) into each one of one or more first release positions (S1) above the respective one or more first mould sections (71) of the at least one first baking mould (7) and a second mode that is adapted for positioning the at least one loading member (2) into each one of two or more second release positions (S2) above the respective two or more second mould sections (81) of the at least one second baking mould (8).

2. Loading assembly (1) according to claim 1, wherein the loading assembly (1) is provided with a support member with a substantially horizontal support surface (11) for supporting the one baking mould (7, 8) relative to the at least one loading member (2), wherein the drive system (3) comprises at least two actuators (31, 32) for moving the at least one loading member (2) in two substantially orthogonal directions (X, Y), parallel to the support surface (11).

3. Loading assembly (1) according to claim 1 or 2, wherein the plurality of baking moulds (7, 8) comprises a first series of at least two first baking moulds (7) and a second series of at least two second baking moulds (8), wherein each one of the first baking moulds (7) forms an interchanging pair with one of the second baking moulds (8), wherein the loading assembly (1) comprises a plurality of loading members (2), one for each interchanging pair, wherein the drive system (3) is operationally coupled to each of the plurality of loading members (2) for positioning each of the plurality of loading members (2) relative to the first baking mould (7) or the second baking mould (8) of a respective interchanging pair, and wherein the control system (4) is arranged for controlling the drive system (3) and switching between the first mode and the second mode for each of the interchanging pairs.

4. Loading assembly (1) according to claim 3, wherein all of the first baking moulds (7) in the first series are arranged to be interchanged by all of the respective second baking moulds (8) in the second series simultaneously, wherein the drive system (3) is arranged for synchronously positioning each of the plurality of loading members (2) above the first baking moulds (7) or the second baking moulds (8) of the first series or the second series, respectively.

5. Loading assembly (1) according to claim 3 or 4, wherein the second baking moulds (8) in the second series are arranged to be placed in a linear array with a center-to-center distance (H1), wherein the plurality of loading members (2) are arranged to extend parallel to the linear array, with a center-to-center distance (H2) between the loading members (2) that is equal or substantially equal to the center-to-center distance (H1) of at least the second baking moulds (8).

6. Loading assembly (1) according to claim 5, wherein the plurality of loading members (2) are operationally coupled to a common carrier (12), wherein the drive system (3) is operationally coupled to the common carrier (12) for moving the plurality of loading members (2) in unison.

7. Loading assembly (1) according to any one of the preceding claims, wherein the loading assembly (1) comprises a dough supply (15) for supplying the dough portions (9) to the at least one loading member (2) in a receiving position (R), wherein the control system (4) is arranged for returning the at least one loading member (2) to the receiving position (R) after each movement of said at least one loading member (2) to one of the one or more first release positions (S1) or one of the one or more second release positions (S2), when the respective one of the first release positions (S1) or the second release positions (S2) is different from the receiving position (R).

8. Loading assembly (1) according to claim 7, wherein the receiving position (R) is fixed relative to first release positions (S1) and the second release positions (S2).

9. Loading assembly (1) according to any one of the preceding claims, wherein the container element (20) comprises two container halves (21, 22) which together define a container volume (V) for receiving the one dough portion (9), wherein the releasing element (25) comprises an actuator (26) that is operationally coupled to both container halves (21, 22) to reciprocally move said container halves (21, 22) to and fro each other between an abutting position and a spaced apart position, wherein, in the spaced apart position, the distance between the container halves (21, 22) is sufficient to allow the one dough portion (9) to pass from the container volume (V) between the container halves (21, 22) under the influence of gravity (G).

10. Loading assembly (1) according to claim 9, wherein the container halves (21, 22) are each provided with an inclined bottom surface (23, 24) which together, in the abutting position, are mutually opposite to define a tapered bottom section of the receiving volume (V), wherein, upon movement of the container halves (21, 22) towards the spaced apart position, the bottom surfaces (23, 24) are arranged to be spaced apart for a controlled passage of the one dough portion (9) therein between.

11. Loading assembly (1) according to any one of the preceding claims, wherein the number of first mould sections (71) is one and the number of second mould sections (81) is at least two, and preferably at least four.

12. Loading assembly (1) according to any one of the preceding claims, wherein the drive system (3) is an XY-drive system.

13. Loading assembly (1) according to any one of the preceding claims, wherein the at least one first baking mould (7) and the at least one second baking mould (8) each comprise a plate-like element (70, 80), wherein the one or more first mould sections (71) and the two or more second mould sections (81) are formed as suitably shaped mould recesses in said plate-like element (70, 80).

14. Loading assembly (1) according to any one of the preceding claims, wherein the at least one first baking mould (7) and the at least one second baking mould (8) are moulds for the production of pizzas, wherein the one or more first mould sections (71) of the at least one first baking mould (7) are dimensioned for the production of mid-sized to full-size pizzas and wherein the one or more second mould sections (81) of the at least one second baking mould (8) are dimensioned for the production of small-sized or mini-sized pizzas.

15. Method for loading dough portions (9), particularly dough balls, into a plurality of baking moulds (7, 8), with the use of the loading assembly (1) according to claim 1, the method being **characterized in that** the control system (4) controls the drive system (3) and switches, depending on the one baking mould (7, 8) being one of the at least one first baking mould (7) or one of the at least one second baking mould (8), between a first mode and a second mode, wherein, in the first mode, the at least one loading member (2) is positioned into each one of one or more first release positions (S1) above the respective one or more first mould sections (71) of the first baking mould (7) and wherein, in the second mode, the at least one loading member (2) is positioned into each one of two or more second release positions (S2) above the respective two or more second mould sections (81) of the second baking mould (8).

## Patentansprüche

1. Ladeanordnung (1) zum Laden von Teigportionen, insbesondere Teigkugeln (9), in eine Vielzahl von Backformen (7, 8), wobei die Ladeanordnung (1) wenigstens ein Ladeelement (2) umfasst, das mit einem Behälterelement (20) zum Aufnehmen einer der Teigportionen und einem Freigabeelement (25) zum Freigeben der einen Teigportion aus dem Behälterelement (20) in eine der Vielzahl der Backformen (7, 8) ausgestattet ist, wobei die Vielzahl von Backformen (7, 8) wenigstens eine erste Backform (7) mit einem oder mehreren ersten Formabschnitten (71) zum getrennten Aufnehmen einer oder mehrerer Teigportionen und wenigstens eine zweite Backform (8), die mit der wenigstens einen ersten Backform (7) austauschbar ist und zwei oder mehr zweite Formabschnitte (81) zum getrennten Aufnehmen zweier oder mehrerer Teigportionen aufweist, umfassen, wobei die Anzahl der ersten Formabschnitte (71) sich von der Anzahl der zweiten Formabschnitte (82) unterscheidet, wobei die Ladeanordnung (1) außerdem ein Antriebssystem (3) umfasst, das für das Positionieren des ersten Ladeelements (2) im Verhältnis zu der ersten Backform (7, 8) ausgelegt ist, wobei die Ladeanordnung (1) **dadurch gekennzeichnet ist, dass** sie außerdem ein Steuerungssystem (4) umfasst, das für das Steuern des Antriebssystems (3) und - in Abhängigkeit davon, ob die erste Backform (7, 8) eine von der wenigstens einen ersten Backform (7) oder eine von der wenigstens einen zweiten Backform (8) ist - zwischen einem ersten Modus, der für das Positionieren des wenigstens einen Ladeelements (2) in jeweils eine der einen oder mehreren ersten Freigabepositionen (S1) oberhalb der jeweiligen einen oder mehreren ersten Formabschnitte (71) der wenigstens einen ersten Backform (7) ausgelegt ist, und einem zweiten Modus, der zum Positionieren des wenigstens einen Ladeelements (2) in jeweils eine der zwei oder mehr zweiten Freigabepositionen (S2) oberhalb der jeweiligen zwei oder mehr zweiten Formabschnitte (81) der wenigstens einen zweiten Backform (8), ausgelegt ist, umzuspringen.

2. Ladeanordnung (1) gemäß Anspruch 1, wobei die Ladeanordnung (1) mit einem Tragelement mit einer im Wesentlichen horizontalen Auflagefläche (11) zum Halten der einen Backform (7, 8) in Bezug auf das wenigstens eine Ladeelement (2) ausgestattet ist, wobei das Antriebssystem (3) wenigstens zwei Stellgeräte (31, 32) zum Bewegen des wenigstens einen Ladeelements (2) in zwei im Wesentlichen orthogonalen Richtungen (X, Y) parallel zu der Auflagefläche (11) umfasst.

3. Ladeanordnung (1) gemäß Anspruch 1 oder 2, wobei die Vielzahl von Backformen (7, 8) eine erste Reihe von wenigstens zwei ersten Backformen (7) und eine zweite Reihe von wenigstens zwei zweiten Backformen (8) umfasst, wobei jede der ersten Backformen (7) ein austauschbares Paar mit einer der zweiten Backformen (8) bildet, wobei das Ladeelement (1) eine Vielzahl von Ladeeinheiten (2), nämlich eine für jedes austauschbare Paar umfasst, wobei das Antriebssystem (3) betriebsbereit mit jedem der Vielzahl der Ladeelemente (2) für das Positionieren jedes der Vielzahl der Ladeelemente (2) in Bezug auf die erste Backform (7) oder die zweite Backform (8) eines jeweiligen austauschbaren Paars verbunden ist, und wobei das Steuersystem (4) für das Steuern des Antriebssystems (3) und das Umspringen zwischen dem ersten Modus und dem zweiten Modus für jedes der austauschbaren Paare ausgelegt ist.

4. Ladeanordnung (1) gemäß Anspruch 3, wobei alle der ersten Backformen (7) in der ersten Reihe so angeordnet sind, dass sie durch alle der jeweiligen zweiten Backformen (8) in der zweiten Reihe gleichzeitig ausgetauscht werden, wobei das Antriebssystem (3) für das synchrone Positionieren jedes der Vielzahl der Ladeelemente (2) oberhalb der ersten Backformen (7) oder der zweiten Backformen (8) der ersten Reihe beziehungsweise der zweiten Reihe ausgelegt ist.

5. Ladeanordnung (1) gemäß Anspruch 3 oder 4, wobei die zweiten Backformen (8) in der zweiten Reihe so angeordnet sind, dass sie in einer linearen Aufstellung mit einem Abstand (H1) von Mitte-zu-Mitte stehen, wobei die Vielzahl der Ladeelemente (2) so angeordnet sind, dass sie sich parallel zu der linearen Aufstellung mit einem Abstand (H2) von Mitte-zu-Mitte zwischen den Ladeelementen (2), der gleich oder im Wesentlichen gleich zu dem Abstand (H1) von Mitte-zu-Mitte von wenigstens den zweiten Backformen (8) ist, erstrecken.

6. Ladeanordnung (1) gemäß Anspruch 5, wobei die Vielzahl von Ladeelementen (2) mit einem üblichen Träger (12) betriebsbereit verbunden sind, wobei das Antriebssystem (3) mit dem üblichen Träger (12) betriebsfunktionell verbunden ist, um die Vielzahl der Ladeelemente (2) übereinstimmend zu bewegen.

7. Ladeanordnung (1) gemäß einem der vorhergehenden Ansprüche, wobei die Ladeanordnung (1) eine Teigzuführung (15) zum Liefern der Teigportionen (9) an das wenigstens eine Ladeelement (2) in einer Empfangsposition (R) umfasst, wobei das Steuersystem (4) dazu ausgelegt ist, das wenigstens eine Ladeelement (2) nach jeder Bewegung dieses wenigstens einen Ladeelements (2) zu einer der einen oder mehreren ersten Freigabepositionen (S1) oder einer der einen oder mehreren zweiten Freigabepositionen (S2) zu der Empfangsposition (R) zurückzuführen, wenn sich die jeweils eine der ersten Freigabepositionen (S1) oder der zweiten Freigabepositionen (S2) von der Empfangsposition (R) unterscheiden.

8. Ladeanordnung (1) gemäß Anspruch 7, wobei die Empfangsposition (R) in Bezug auf die ersten Freigabepositionen (S1) und die zweiten Freigabepositionen (S2) festgelegt ist.

9. Ladeanordnung (1) gemäß einem der vorhergehenden Ansprüche, wobei das Behälterelement (20) zwei Behälterhälften (21, 22) umfasst, die zusammen ein Behältervolumen (V) zum Aufnehmen der einen Teigportion (9) definieren, wobei das Freigabeelement (25) einen Stellmotor (26) umfasst, der mit beiden Behälterhälften (21, 22) betriebsfunktionell verbunden ist, um die Behälterhälften (21, 22) wechselseitig aufeinander zu und voneinander fort zwischen einer aneinanderstoßenden Position und einer voneinander beabstandeten Position zu bewegen, wobei der Abstand zwischen den Behälterhälften (21, 22) in der voneinander beabstandeten Position ausreicht, um es der Teigportion (9) zu ermöglichen, aus dem Behältervolumen (V) zwischen den Behälterhälften (21, 22) unter dem Einfluss der Schwerkraft (G) herauszutreten.

10. Ladeanordnung (1) gemäß Anspruch 9, wobei die Behälterhälften (21, 22) jeweils mit einer schrägen Bodenfläche (23, 24) versehen sind, die zusammen, in der aneinanderstoßenden Position, einander gegenüberliegen, um einen spitz zulaufenden Bodenabschnitt des Aufnahmevolumens (V) zu definieren, wobei die Bodenflächen (23, 24) dafür ausgelegt sind, bei Bewegung der Behälterhälften (21, 22) in Richtung auf die beabstandete Position so beabstandet zu sein, dass ein kontrolliertes Hindurchtreten der einen Teigportion (9) dazwischen erfolgt.

11. Ladeanordnung (1) gemäß einem der vorhergehenden Ansprüche, wobei die Anzahl der ersten Formabschnitte (71) ist und die Anzahl der zweiten Formabschnitte (81) wenigstens zwei, und bevorzugt wenigstens vier ist.

12. Ladeanordnung (1) gemäß einem der vorhergehenden Ansprüche, wobei das Antriebssystem (3) ein XY-Antriebssystem ist.

13. Ladeanordnung (1) gemäß einem der vorhergehenden Ansprüche, wobei die wenigstens eine erste Backform (7) und die wenigstens eine zweite Backform (8) jeweils ein plattenähnliches Element (70, 80) umfassen, wobei die ein oder mehreren ersten Formabschnitte (71) und die zwei oder mehr zweiten Formabschnitte (81) als passend geformte Formvertiefungen in diesem plattenähnlichen Element (70, 80) ausgebildet sind.

14. Ladeelement (1) gemäß einem der vorhergehenden Ansprüche, wobei die wenigstens eine erste Backform (7) und die wenigstens eine zweite Backform (8) Formen für die Herstellung von Pizzen sind, wobei die ein oder mehreren Formabschnitte (71) der wenigstens einen ersten Backform (7) für die Herstellung mittelgroßer bis großer Pizzen dimensioniert sind und wobei die ein oder mehreren Formabschnitte (81) der wenigstens einen zweiten Backform (8) für die Herstellung von kleinen oder minigroßen Pizzen dimensioniert sind.

15. Verfahren zum Einbringen von Teigportionen (9), insbesondere Teigkugeln, in eine Vielzahl von Backformen (7, 8) unter Verwendung der Ladeanordnung (1) gemäß Anspruch 1, wobei das Verfahren **dadurch gekennzeichnet ist, dass** das Steuersystem (4) das Antriebssystem (3) steuert und abhängig davon, ob die eine Backform (7, 8) eine von der wenigstens einen ersten Backform (7) oder eine von der wenigstens einen zweiten Backform (8) ist, zwischen einem ersten Modus und einem zweiten Modus wechselt, wobei in dem ersten Modus das wenigstens eine Ladeelement (2) in jede der einen oder mehreren ersten Freigabepositionen (S1) oberhalb der jeweiligen einen oder mehreren ersten Formabschnitte (71) der ersten Backform (7) positioniert wird, und wobei in dem zweiten Modus das wenigstens eine Ladeelement (2) in jede von zwei oder mehr Freigabepositionen (S2) oberhalb der jeweiligen zwei oder mehr zweiten Formabschnitte (81) der zweiten Backform (8) positioniert wird.

## Revendications

1. Ensemble de chargement (1) pour charger des portions de pâte, en particulier des boules de pâte (9), dans une pluralité de moules de cuisson (7, 8), l'ensemble de chargement (1) comprenant au moins un organe de chargement (2) qui est pourvu d'un élément récipient (20) destiné à recevoir l'une des portions de pâte et d'un élément de libération (25) pour libérer la portion de pâte de l'élément récipient (20) dans l'un de la pluralité de moules de cuisson (7, 8), la pluralité de moules de cuisson comprenant au moins un premier moule de cuisson (7) comportant une ou plusieurs premières sections de moule (71) destinées à recevoir séparément une ou plusieurs portions de pâte et au moins un deuxième moule de cuisson (8), échangeable avec l'au moins un premier moule de cuisson (7) et comportant deux ou plus de deux deuxièmes sections de moule (81) destinées à recevoir séparément deux ou plus de deux portions de pâte, le nombre de premières sections de moule (71) étant différent du nombre de deuxièmes sections de moule (82), l'ensemble de chargement (1) comprenant, en outre, un système d'entraînement (3) qui est agencé pour positionner l'au moins un organe de chargement (2) par rapport au moule de cuisson (7, 8), l'ensemble de chargement (1) étant **caractérisé en ce qu'**il comprend, en outre, un système de commande (4) qui est agencé pour commander le système d'entraînement (3) et réaliser une commutation, selon que le moule de cuisson (7, 8) est l'au moins un premier moule de cuisson (7) ou l'au moins un deuxième moule de cuisson (8), entre un premier mode qui est apte à positionner l'au moins un organe de chargement (2) dans chacune d'une ou plusieurs premières positions de libération (S1) au-dessus de ladite une ou plusieurs premières sections de moule (71) respectives de l'au moins un premier moule de cuisson (7) et un deuxième mode qui est apte à positionner l'au moins un organe de chargement (2) dans chacune d'une de deux ou plus de deux deuxièmes positions de libération (S2) au-dessus des deux ou plus de deux deuxièmes sections de moule (81) respectives de l'au moins un deuxième moule de cuisson (8).

2. Ensemble de chargement (1) selon la revendication 1, où l'ensemble de chargement (1) est pourvu d'un organe de support doté d'une surface de support sensiblement horizontale (11) pour supporter le moule de cuisson (7, 8) par rapport à l'au moins un organe de chargement (2), le système d'entraînement (3) comprenant au moins deux actionneurs (31, 32) pour déplacer l'au moins un organe de chargement (2) dans deux directions sensiblement orthogonales (X, Y), parallèles à la surface de support (11).

3. Ensemble de chargement (1) selon la revendication 1 ou 2, dans lequel la pluralité de moules de cuisson (7, 8) comprend une première série d'au moins deux premiers moules de cuisson (7) et une deuxième série d'au moins deux deuxièmes moules de cuisson (8), chacun des premiers moules de cuisson (7) formant une paire échangeable avec l'un des deuxièmes moules de cuisson (8), l'ensemble de chargement (1) comprenant une pluralité d'organes de chargement (2), un pour chaque paire échangeable, le système d'entraînement (3) étant fonctionnement accouplé à chacun de la pluralité d'organes de chargement (2) pour positionner chacun de la pluralité d'organes de chargement (2) par rapport au premier moule de cuisson (7) ou au deuxième moule de cuisson (8) d'une paire échangeable respective, et le système de commande (4) étant agencé pour commander le système d'entraînement (3) et réaliser une commutation entre le premier mode et le deuxième mode pour chacune des paires échangeables.

4. Ensemble de chargement (1) selon la revendication 3, dans lequel tous les premiers moules de cuisson (7) de la première série sont agencés pour être échangés avec tous les deuxièmes moules de cuisson (8) respectifs de la deuxième série simultanément, le système d'entraînement (3) étant agencé pour positionner en synchronisation chacun de la pluralité d'organes de chargement (2) au-dessus des premiers moules de cuisson (7) ou des deuxièmes moules de cuisson (8) de la première série ou la deuxième série, respectivement.

5. Ensemble de chargement (1) selon la revendication 3 ou 4, dans lequel les deuxièmes moules de cuisson (8) de la deuxième série sont agencés pour être placés en un agencement linéaire avec une distance centre à centre (H1), la pluralité d'organes de chargement (2) étant agencés pour s'étendre parallèlement à l'agencement linéaire, avec une distance centre à centre (H2) entre les organes de chargement (2) qui est égale ou sensiblement égale à la distance centre à centre (H1) d'au moins les deuxièmes moules de cuisson (8).

6. Ensemble de chargement (1) selon la revendication 5, dans lequel la pluralité d'organes de chargement (2) est fonctionnement accouplée à un organe porteur commun (12), le système d'entraînement (3) étant fonctionnement accouplé à l'organe porteur commun (12) pour déplacer la pluralité d'organes de chargement (2) à l'unisson.

7. Ensemble de chargement (1) selon l'une quelconque des revendications précédentes, où l'ensemble de chargement (1) comprend une alimentation en pâte (15) pour distribuer les portions de pâte (9) jusqu'à l'au moins un organe de chargement (2) dans une position de réception (R), le système de commande (4) étant agencé pour ramener l'au moins un organe de chargement (2) jusqu'à la position de réception (R) après chaque déplacement dudit au moins un organe de chargement (2) jusqu'à l'une des une ou plusieurs premières positions de libération (S1) ou jusqu'à l'une des une ou plusieurs deuxièmes positions de libération (S2), lorsque l'une respective des premières positions de libération (S1) ou des deuxièmes positions de libération (S2) est différente de la position de réception (R).

8. Ensemble de chargement (1) selon la revendication 7, dans lequel la position de réception (R) est fixe par rapport aux premières positions de libération (S1) et aux deuxièmes positions de libération (S2).

9. Ensemble de chargement (1) selon l'une quelconque des revendications précédentes, dans lequel l'élément récipient (20) comprend deux moitiés de récipient (21, 22) qui, conjointement, délimitent un volume de récipient (V) destiné à recevoir la portion de pâte (9), l'élément de libération (25) comprenant un actionneur (26) qui est fonctionnement accouplé aux deux moitiés de récipient (21, 22) pour faire aller et venir lesdites moitiés de récipient (21, 22) entre une position de butée et une position espacée, où, dans la position espacée, la distance entre les moitiés de récipient (21, 22) est suffisante pour permettre à la portion de pâte (9) de passer depuis le volume de récipient (V) entre les moitiés de récipient (21, 22) sous l'influence de la gravité (G).

10. Ensemble de chargement (1) selon la revendication 9, dans lequel les moitiés de récipient (21, 22) sont chacune dotées d'une surface inférieure inclinée (23, 24) qui, conjointement, dans la position de butée, sont mutuellement opposées pour délimiter une section inférieure effilée du volume de réception (V), où, lors du déplacement des moitiés de récipient (21, 22) vers la position espacée, les surfaces inférieures (23, 24) sont agencées pour être espacées pour un passage contrôlé de la portion de pâte (9) entre elles.

11. Ensemble de chargement (1) selon l'une quelconque des revendications précédentes, dans lequel le nombre de premières sections de moule (71) est égal à un et le nombre de deuxièmes sections de moule (81) est d'au moins deux et, de préférence, d'au moins quatre.

12. Ensemble de chargement (1) selon l'une quelconque des revendications précédentes, dans lequel le système d'entraînement (3) est un système d'entraînement XY.

13. Ensemble de chargement (1) selon l'une quelconque des revendications précédentes, dans lequel l'au moins un premier moule de cuisson (7) et l'au moins un deuxième moule de cuisson (8) comprennent chacun un élément de type plaque (70, 80), dans lequel les une ou plusieurs premières sections de moule (71) et les une ou plusieurs deuxièmes sections de moule (81) sont formées en des évidements de moule de forme appropriée dans ledit élément de type plaque (70, 80).

14. Ensemble de chargement (1) selon l'une quelconque des revendications précédentes, dans lequel l'au moins un premier moule de cuisson (7) et l'au moins un deuxième moule de cuisson (8) sont des moules pour la production de pizzas, les une ou plusieurs premières sections de moule (71) de l'au moins un premier moule de cuisson (7) étant dimensionnées pour la production de pizzas de taille moyenne à taille normale et les une ou plusieurs deuxièmes sections de moule (81) de l'au moins un deuxième moule de cuisson (8) étant dimensionnées pour la production de pizzas de petite taille ou de taille mini.

15. Procédé pour charger des portions de pâte, en particulier des boules de pâte, dans une pluralité de moules de cuisson (7, 8), à l'aide de l'ensemble de chargement (1) selon la revendication 1, le procédé étant **caractérisé en ce que** le système de commande (4) commande le système d'entraînement (3) et réalise une commutation, selon que le moule de cuisson (7, 8) est l'au moins un premier moule de cuisson (7) ou l'au moins un deuxième moule de cuisson (8), entre un premier mode et un deuxième mode, où, dans le premier mode, l'au moins un organe de chargement (2) est positionné dans chacune d'une ou plusieurs premières positions de libération (S1) au-dessus de ladite une ou plusieurs premières sections de moule (71) respectives du premier moule de cuisson (7) et où, dans le deuxième mode, l'au moins un organe de chargement (2) est positionné dans chacune de deux ou plus de deux deuxièmes positions de libération (S2) au-dessus des deux ou plus de deux deuxièmes sections de moule (81) respectives du deuxième moule de cuisson (8).
